# EUROPEAN PATENT SPECIFICATION

(11) **EP 3 184 370 B1**
(45) Date of publication and mention of the grant of the patent: **20.06.2018**
(21) Application number: 16206570.0
(22) Date of filing: 23.12.2016
(51) Int. Cl.: B60R 11/04

(54) **VEHICLE INTERIOR IMAGING APPARATUS**
BILDGEBUNGSVORRICHTUNG FÜR DEN FAHRZEUGINNENRAUM
APPAREIL IMAGEUR D'INTÉRIEUR DE VÉHICULE

(30) Priority: 25.12.2015 JP 2015254627; 25.12.2015 JP 2015254628
(43) Date of publication of application: 28.06.2017
(73) Proprietor: AISIN SEIKI KABUSHIKI KAISHA, Kariya-shi, Aichi-ken, 448-8650 (JP)
(72) Inventor: KADOMAE, Kazuhito, Kariya-shi, Aichi 448-8650 (JP); MASE, Hisayasu, Kariya-shi, Aichi 448-8650 (JP)
(74) Representative: TBK

(56) References cited:
- EP-A1- 2 031 863
- WO-A1-2004/049277
- WO-A2-03/047240
- WO-A2-2008/058277
- CN-U- 204 350 133

## Description

### TECHNICAL FIELD

This disclosure relates to a vehicle interior imaging apparatus, which images an interior scene of a vehicle.

### BACKGROUND DISCUSSION

An imaging apparatus has been used in the related art to image a passenger in a vehicle. Such a technology is disclosed in, for example, JP 2012-129699A (Reference 1).

A face imaging system disclosed in Reference 1 is configured to determine whether or not an attachment direction of an imaging means to image a user's face is appropriate, and to report the result when it is determined that the attachment direction is not appropriate. In addition, the face imaging system includes a direction change mechanism that is capable of changing the attachment direction of the imaging means.

In a vehicle, an imaging apparatus mounting position may often be limited depending on an interior design. Therefore, there is a limitation even in the configuration in which the attachment direction of the imaging means is changeable, like the technology disclosed in Reference 1. In addition, depending on the attachment direction of the imaging means, the imaging means may not be directed to a desired imaging direction thereof. In this case, changing the attachment direction of the imaging means by the direction-variable mechanism may be considered. However, there is a likelihood that the size of the imaging apparatus is increased when the direction-variable mechanism is provided in the housing of the imaging apparatus. In addition, changing the direction for each housing may also be considered. In this case, however, there is a likelihood that the interior design of the vehicle is damaged. In addition, it is necessary to provide a determination device to determine the attachment direction of the imaging means, which causes an increase in price.

A vehicle interior imaging device according to the preamble of claim 1 is known from document WO 03/047240 A2.

### SUMMARY

Thus, a need exists for a vehicle interior imaging apparatus, which has a high degree of freedom in setting an imaging direction, and is inexpensive and small-sized. This objective is achieved by means of a vehicle interior imaging apparatus according to claim 1.

According to the invention the vehicle interior imaging apparatus includes: an imaging device configured to image a scene of an interior in a vehicle; a light source device configured to illuminate an imaging range of the imaging device; a housing configured to accommodate the imaging device and the light source device therein and attached to the interior; and a holder configured to support the imaging device and the light source device to be integrally rotatable within the housing.

With this configuration, optical axes of the imaging device and the light source device can be integrally rotated by the holder. Accordingly, when it is desired to direct the imaging device to any direction, the direction is easily changed. In addition, because light can be irradiated from the light source device to an imaging object, it is possible to appropriately image the imaging object. In addition, because the optical axes of the imaging device and the light source device can be integrally rotated by rotating the holder, a direction change mechanism or a determination means to determine the attachment direction are not required. Accordingly, it is possible to implement a vehicle interior imaging apparatus, which has a high degree of freedom in the setting of an imaging direction and is inexpensive and small-sized.

It is preferable that the holder includes fixing portions configured to fix the imaging device and the light source device, respectively, and the fixing portions are configured in such a manner where the optical axes of the imaging device and the light source device are not orthogonal to the rotation axis of the holder, and a bent portion is provided between the fixing portions.

With this configuration, even when it is desired to rotate the imaging device and the light source device, it is possible to make the imaging device and the light source device close to the light-transmitting surface of the housing. Accordingly, it is possible to prevent the optical axes of the imaging device and the light source device from interfering with each other, or to prevent the optical axes of the imaging device and the light source device from interfering with the housing.

According to the invention the vehicle interior imaging apparatus further includes a light-shield plate provided on the holder between the imaging device and the light source device to prevent light irradiated from the light source device from being incident on the imaging device.

With this configuration, even when the imaging device and the light source device are rotated, light directed to the imaging device can be reliably shielded because the light-shield plate is provided between the imaging device and the light source device to be integrally rotated with the holder.

It is preferable that the holder is supported, with respect to the housing, at the opposite sides of the fixing portion that fixes the imaging device.

With this configuration, the wobbling of the optical axis of the imaging device can be reduced because the opposite sides of the imaging device can be supported with respect to the housing.

It is preferable that the holder has an end surface located to be exposed from the housing, and the end surface may be provided with an angle setting mechanism configured to automatically set a rotation angle of the holder when the housing is attached to a jig provided in the vehicle interior.

With this configuration, even if the position at which the vehicle interior imaging apparatus is attached with respect to an imaging object is different per vehicle, the optical axes of the imaging device and the light source device can be automatically set to appropriate positions by simply attaching the vehicle interior imaging apparatus to the jig provided in the interior in the vehicle. through the angle setting mechanism

According to the invention the light-shield plate is a support portion that rotatably supports the holder with respect to the housing.

With this configuration, because the light-shield plate between the imaging device and the light source device can support the imaging device and the light source device with respect to the housing, the wobbling of the optical axes of the imaging device and the light source device with respect to the housing can be reduced.

According to the invention the holder includes another support portion configured to be rotatably supported by the housing at an opposite position to the light-shield plate with the imaging device being interposed therebetween.

With this configuration, because the opposite sides of the imaging device may be supported with respect to the housing, wobbling of the optical axis of the imaging device may be further reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan view of a vehicle interior imaging apparatus;
Fig. 2 is an enlarged view of a light-shield plate and a wall portion;
Fig. 3 is a view illustrating an example of a jig to which the vehicle interior imaging apparatus is attached;
Fig. 4 is a view illustrating the state before a holder is rotated; and
Fig. 5 is a view illustrating the state after the holder is rotated.

### DETAILED DESCRIPTION

A vehicle interior imaging apparatus disclosed here is configured to appropriately image an interior scene of a vehicle even if it is attached to another vehicle. Hereinafter, the vehicle interior imaging apparatus 1 of the embodiment disclosed here will be described.

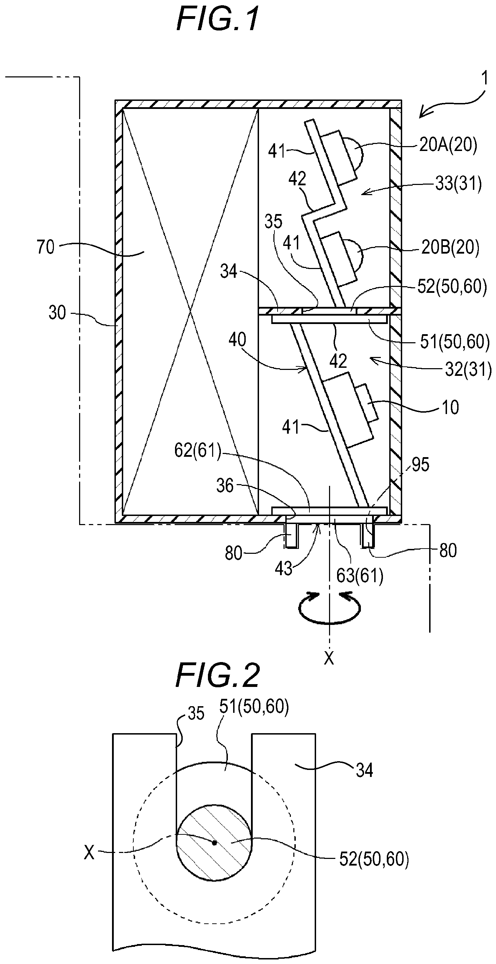

Fig. 1 illustrates a plan view of the vehicle interior imaging apparatus 1. In addition, Fig. 1 is illustrated in a state where a portion of a housing 30 (that will be described later) is viewed therethrough to make the inside of the vehicle interior imaging apparatus 1 visible.

As illustrated in Fig. 1, the vehicle interior imaging apparatus 1 of the embodiment disclosed here includes an imaging device 10, a light source device 20, a housing 30, a holder 40, and a light-shield plate 50. The imaging device 10 images an interior scene of a vehicle. The interior scene in the vehicle may be the interior itself, or may include a passenger who is present in the vehicle. In addition, the imaging device 10 may be configured to image a passenger when the passenger is present in the vehicle, and to image the interior when no passenger is present in the vehicle. With this configuration, it becomes possible to specify a passenger's state, or to monitor whether or not a suspicious person trespasses the parked vehicle based on a captured image. Such an imaging device 10 may be configured using an imaging device such as a CMOS image sensor or a CCD image sensor. In addition, in the embodiment disclosed here, it is suitable to use the imaging device 10 that has a wide imaging range (a wide view angle) such that an interior scene in the vehicle can be imaged by using one imaging device 10.

The light source device 20 illuminates the imaging range of the imaging device 10. The imaging device 10 has the imaging range within which an interior scene of the vehicle can be imaged as described above. Meanwhile, the image acquired by the imaging device 10 is often used for a particular purpose (e.g., for the purpose of specifying a passenger's state or monitoring the trespassing of a suspicious person). In addition, imaging may be performed at night, and the passenger may be imaged against the light because the orientation of the vehicle is often changed during driving. Therefore, the light source device 20 is configured to irradiate light to the direction in which an imaging target object is located within the imaging range. In the present embodiment, because the light source device 20 is configured to illuminate a vehicle driver and a passenger on a passenger seat, the light source device 20 includes two light source devices 20A and 20B, of which the illumination directions are set to be different from each other. In addition, the light irradiated by the light source device 20 may be, for example, infrared beams (infrared light), in order to prevent the passenger from feeling the light glaring. Of course, a light source device 20 may also be used to irradiate visible light.

The housing 30 accommodates the imaging device 10 and the light source device 20 therein, and is attached to the vehicle interior. The housing 30 is formed of, for example, a resin, and has an accommodating space 31 therein. The imaging device 10 and the light source device 20 are accommodated in the accommodating space 31. The housing 30 is attached to the interior of the vehicle in the state in which the imaging device 10 and the light source device 20 are accommodated in the accommodating space 31. Here, the housing 30 is attached to a position at which it does not damage the interior design of the vehicle. This position is preset per for each vehicle from a pillar, a front center panel, and the like. In addition, the housing 30 further accommodates a control unit 70 configured to control an operation of the imaging device 10 or the light source device 20. In addition, the portion of the housing 30 in front of the imaging device 10 or the light source device 20 (i.e., the portion on the optical axis) may be formed of a resin that transmits infrared light when the light source device 20 is used to irradiate infrared light. This configuration may make it difficult to view the inside of the housing 30 from the outside, which may improve the appearance of the vehicle interior imaging apparatus 1. Of course, when the light source device 20 is used to irradiate visible light, the housing 30 may be formed of a resin that transmits the visible light.

The holder 40 supports the imaging device 10 and the light source device 20 to be integrally rotatable in the housing 30. As described above, the imaging device 10 and the light source device 20 are accommodated in the accommodating space 31 of the housing 30. The expression "integrally rotatable" means that the imaging device 10 and the light source device 20 are configured to rotate together, rather than configured to rotate separately. In addition, the holder 40 is configured to allow each of the imaging device 10 and the light source device 20 to rotate about an axis crossing at least the optical axis, rather than about the optical axis thereof. Hereinafter, the rotation axis of the holder 40 will be described as a rotation axis X.

The light-shield plate 50 is provided on the holder 40 between the imaging device 10 and the light source device 20, and prevents light irradiated from the light source device 20 from being incident on the imaging device 10. The imaging device 10 forms an image by receiving the light. Meanwhile, the light source device 20 irradiates light to an imaging object. Therefore, when the light irradiated from the light source device 20 is directly incident on the imaging device 10, the imaging device 10 may fail to appropriately image a vehicle interior scene. Thus, in order to prevent the light irradiated from the light source device 20 from being incident on the imaging device 10, the light-shield plate 50 is provided between the imaging device 10 and the light source device 20 to shield light. In the embodiment disclosed here, because the imaging device 10 and the light source device 20 are rotatably fixed by the holder 40 as described above, the light-shield plate 50 is provided on the holder 40 so as to shield the light as described above even if the holder 40 rotates. The light-shield plate 50 may be integrally formed with the holder 40, or may be configured as a separate member and attached to the holder 40.

Here, the imaging device 10 and the light source device 20 are accommodated in the accommodating space 31. In order to appropriately perform light shielding described above, however, the accommodating space 31 may be divided into a first accommodating space 32 in which the imaging device 10 is accommodated and a second accommodating space 33 in which the light source device 20 is accommodated, a wall portion 34 may be provided as a portion of the housing 30 between the first accommodating space 32 and the second accommodating space 33, and the wall portion 34 and the light-shield plate 50 may overlap with each other when viewing the light-shield plate 50 in the axial direction of the rotation axis X of the holder 40.

According to the invention, the light-shield plate 50 is used as a support portion 60 that rotatably supports the holder 40 with respect to the housing 30. Fig. 2 is a view illustrating the light-shield plate 50 and the wall portion 34 viewed in the direction of the rotation axis X. As illustrated in Fig. 2, for example, a U-shaped recess 35 may be provided in the wall portion 34, and the light-shield plate 50 may include a large-diameter portion 51 and a small-diameter portion 52, which are coaxially rotatable. When the small-diameter portion 52 is rotatably fitted into the recess 35 and the axial side surfaces of the large-diameter portion 51 and the wall portion 34 are provided to come into contact with each other, the large-diameter portion 51 and the wall portion 34 may shield the light from the light source device 20, and the small-diameter portion 52 may support the holder 40 with respect to the housing 30.

In addition, according to the invention, the holder 40 includes another support portion 61, which is rotatably supported by the housing 30 at the opposite position to the light-shield plate 50 with the imaging device 10 being interposed therebetween. The expression "the opposite position to the light-shield plate 50 with the imaging device 10 being interposed therebetween" corresponds to the position at the axial opposite side when the rotation axis X of the holder 40 is set as the axial direction and the side at which the support portion 60 is provided is regarded as axial one side of the imaging device 10. Accordingly, when the rotation axis X of the holder 40 is set as the axial direction, the holder 40 is supported with respect to the housing 30 at the axial opposite sides of the imaging device 10. That is, assuming that the portion of the holder 40 that fixes the imaging device 10 is a fixing portion 41, the holder 40 is supported with respect to the housing 30 at opposite sides of the fixing portion 41. Accordingly, because the imaging device 10 is supported at opposite ends thereof with respect to the housing 30, it is possible to suppress the deviation of the optical axis of the imaging device 10.

In addition, like the light-shield plate 50, the support portion 61 may include a large-diameter portion 62 and a small-diameter portion 63, and the small-diameter portion 63 may be rotatably fitted into a U-shaped recess 36 formed in the housing 30 to support the holder 40 with respect to the housing 30. At this time, because it is possible to prevent light from being incident on the accommodating space 31 (in particular, the first accommodating space 32) from the outside of the housing 30 by providing the large-diameter portion 62 with a greater outer diameter than the width of an opening in the recess 36, it is possible to suppress the light from being incident on the imaging device 10.

Here, the imaging device 10 and the light source device 20 are fixed to the respective fixing portions 41 of the holder 40. The imaging device 10 and the light source device 20 to the fixing portions 41 may be fixed using, for example, a piece of tape or an adhesive, or may be fixed using solder. As illustrated in Fig. 1, the fixing portions 41 are configured in such a manner where the optical axes of the imaging device 10 and the light source device 20 are not orthogonal to the rotation axis X of the holder 40. The optical axes of the imaging device 10 and the light source device 20 correspond respectively to the center of the imaging range of the imaging device 10 and the center of the light-emitting range by the light source device 20. The imaging device 10 and the light source device 20 are fixed to the holder 40 not to be orthogonal to the rotation axis X of the holder 40.

In addition, a bent portion 42 is provided between the fixing portions 41. The expression "between the fixing portions 41" means "between two adjacent fixing portions 41 of the holder 40." The bent portion 42 refers to a portion that is bent in relation to the fixing portion 41. Thus, the holder 40 is configured in such a manner where a bent portion is present between each two adjacent fixing portions 41. Here, as illustrated in Fig. 1, the bent portion 42 is provided in such a manner where the imaging device 10 and the light source device 20 are arranged along the rotation axis X of the holder 40. In addition, as illustrated in Fig. 1, the imaging device 10 and the light source device 20 may be installed to be located on the rotation axis X of the holder 40.

The holder 40 is located in such a manner where an end surface 43 thereof is exposed from the housing 30. The end surface 43 is an axial end surface in the rotation axis X of the holder 40. In particular, in the present embodiment, the end surface 43 at the axial one side of the holder 40 is exposed from the housing 30. In addition, in the present embodiment, as described above, the small-diameter portion 63 of the holder 40 is rotatably fitted into the recess 36 of the housing 30. However, the axial end surface of the small-diameter portion 63 is exposed from the housing 30.

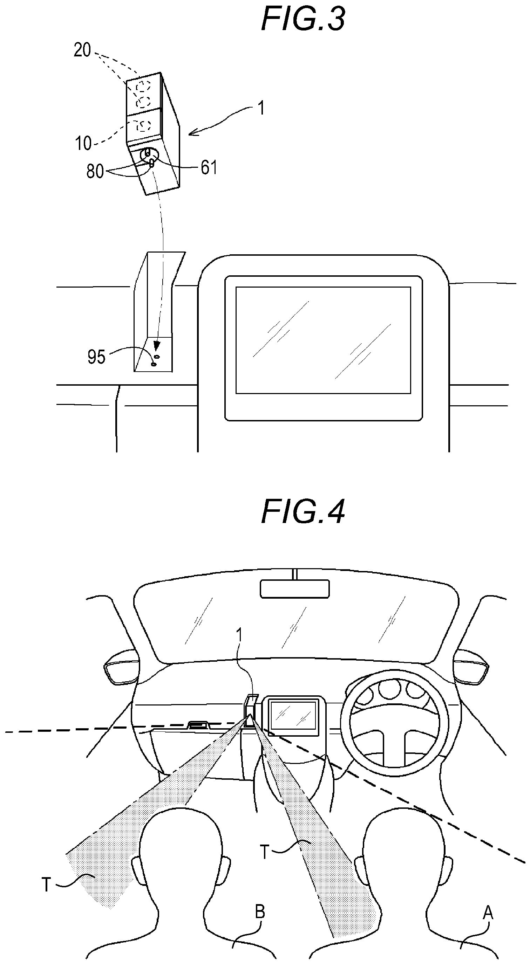

The end surface 43 is provided with an angle setting mechanism 80, which automatically sets the rotation angle of the holder 40 when the housing 30 is attached to a jig 95 provided in the vehicle interior. The jig 95 is a member that fixes the vehicle interior imaging apparatus 1. Here, as described above, the vehicle interior imaging apparatus 1 is provided on a pillar, a front center panel, or the like which is set for each vehicle. Thus, the jig 95 is installed at the position that is set for each vehicle. Fig. 3 illustrates an example of the jig 95 provided on the front panel.

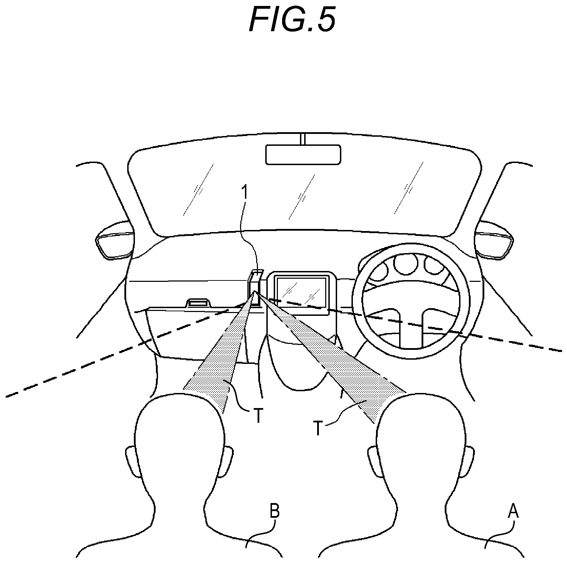

In the present embodiment, two convex portions, which are an example of the angle setting mechanism 80, are provided on the end surface 43. Concave portions (an example of the jig 95) fitted on the convex portions may be previously provided on the jig 95 to be matched with the optical axes of the imaging device 10 and the light source device 20. Thereby, as illustrated in Fig. 4, even when the optical axis of the light source device 20 (in FIG. 4, the range within which light is irradiated by the light source device 20 is indicated by "T") is not directed to an imaging object (e.g., a driver A and a passenger B on a passenger seat), the vehicle interior imaging apparatus 1 may be located by fitting the convex portions into the concave portions. This enables the rotation angle of the holder 40 to be changed, and the optical axis of the light source device 20 to be automatically set to be directed to the imaging object as illustrated in Fig. 5. In addition, when the imaging device 10, of which the imaging range is a wide view, is used, the imaging range of the imaging device 10 is rotated according to the adjustment of the optical axis of the light source device 20, as illustrated in Fig. 5. However, it is possible to image the driver A and the passenger B on the passenger seat.

### (Other Embodiments)

Although an example in which two light source devices 20 are provided has been described in the above-described embodiment, one light source device 20 or three or more light source devices 20 may be provided. In addition, plural imaging devices 10 may be provided.

Although the holder 40 has been described in the above-described embodiment as being supported at opposite sides of the fixing portion 41, which fixes the imaging device 10, with respect to the housing 30, the holder 40 may be supported at one side of the fixing portion 41.

Although the holder 40 has been described in the above embodiment as including the bent portion 42, the holder 40 may not include the bent portion 42.

Although the angle setting mechanism 80 has been described in the above embodiment as being provided on the end surface 43 of the holder 40, the angle setting mechanism 80 may be provided on any position, other than the end surface 43 of the holder 40.

Although the holder 40 has been described in the above embodiment as the rotation angle thereof being set when the housing 30 is attached to the jig 95, the holder 40 may be configured to be rotated by a drive mechanism (e.g. a motor) depending on the direction in which an imaging object is located or the direction in which light is emitted after the housing 30 is attached to the jig 95. With this configuration, the rotation angle of the holder 40 may be set according to, for example, the movement of a passenger seat.

This disclosure is used in a vehicle interior imaging apparatus that images an interior scene of a vehicle.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Accordingly, it is expressly intended that all such variations, changes and equivalents which fall within the scope of the present invention as defined in the claims, be embraced thereby.

## Claims

1. A vehicle interior imaging apparatus (1) comprising:
an image device (10) configured to image a scene of an interior of a vehicle;
a light source device (20) configured to illuminate an imaging range of the imaging device;
a housing (30) configured to accommodate the imaging device and the light source device therein, and attached to the interior; and
a holder (40) configured to support the imaging device and the light source device to be integrally rotatable with the housing;
a light-shield plate (50) provided on the holder between the imaging device and the light source device to prevent light irradiated from the light source device from being incident on the imaging device
**characterized in that**
the light-shield plate (50) is a support portion configured to rotatably support the holder (40) with respect to the housing (30), wherein the holder (40) includes another support portion that is rotatably supported by the housing at an opposite position to the light-shield plate (50) with the imaging device being interposed therebetween.

2. The vehicle interior imaging apparatus according to claim 1, wherein the holder includes fixing portions (41) configured to fix the imaging device and the light source device respectively, and
the fixing portions are configured in such a manner where optical axes of the imaging device and the light source device are not orthogonal to a rotation axis of the holder, and a bent portion (42) is provided between the fixing portions.

3. The vehicle interior imaging apparatus according to any one of claims 1 to 2, wherein the holder is supported, with respect to the housing, at opposite sides of a fixing portion configured to fix the imaging device.

4. The vehicle interior imaging apparatus according to any one of claims 1 to 3, wherein the holder has an end surface (43) located to be exposed from the housing, and
the end surface is provided with an angle setting mechanism (80) configured to automatically set a rotation angle of the holder when the housing is attached to a jig (95) provided in the vehicle interior.

## Patentansprüche

1. Fahrzeuginnenraumabbildungsvorrichtung (1), mit:
einer Abbildungseinrichtung (10), die konfiguriert ist, eine Szene im Innenraum eines Fahrzeugs abzubilden;
einer Lichtquelleneinrichtung (20), die konfiguriert ist, einen Abbildungsbereich der Abbildungseinrichtung zu beleuchten;
einem Gehäuse (30), das konfiguriert ist, die Abbildungseinrichtung und die Lichtquelleneinrichtung darin aufzunehmen, und in dem Innenraum angebaut ist; und
einem Halter (40), der konfiguriert ist, die Abbildungseinrichtung und die Lichtquelleneinrichtung zu halten, um zusammen mit dem Gehäuse drehbar zu sein;
einer Lichtabschirmplatte (50), die auf dem Halter zwischen der Abbildungseinrichtung und der Lichtquelleneinrichtung vorgesehen ist, um zu verhindern, dass von der Lichtquelleneinrichtung abgestrahltes Licht auf die Abbildungseinrichtung trifft,
**dadurch gekennzeichnet, dass**
die Lichtabschirmplatte (50) ein Halteabschnitt ist, der konfiguriert ist, den Halter (40) bezüglich des Gehäuses (30) drehbar zu halten, wobei der Halter (40) einen weiteren Halteabschnitt aufweist, der durch das Gehäuse an einer der Lichtabschirmplatte (50) gegenüberliegenden Position drehbar gehalten ist, wobei die Abbildungseinrichtung dazwischen angeordnet ist.

2. Fahrzeuginnenraumabbildungsvorrichtung nach Anspruch 1, wobei
der Halter Befestigungsabschnitte (41) aufweist, die konfiguriert sind, die Abbildungseinrichtung bzw. die Lichtquelleneinrichtung festzulegen, und
die Befestigungsabschnitte derart konfiguriert sind, dass die optischen Achsen der Abbildungseinrichtung und der Lichtquelleneinrichtung nicht senkrecht zu einer Drehachse des Halters sind und ein gebogener Abschnitt (42) zwischen den Befestigungsabschnitten vorgesehen ist.

3. Fahrzeuginnenraumabbildungsvorrichtung nach einem der Ansprüche 1 bis 2, wobei der Halter bezüglich des Gehäuse an gegenüberliegenden Seiten eines Befestigungsabschnitts gehalten ist, der zur Befestigung der Abbildungseinrichtung konfiguriert ist.

4. Fahrzeuginnenraumabbildungsvorrichtung nach einem der Ansprüche 1 bis 3, wobei der Halter eine Endfläche (43) aufweist, die so angeordnet ist, dass sie von dem Gehäuse freiliegt, und
die Endfläche mit einem Winkeleinstellmechanismus (80) versehen ist, der konfiguriert ist, automatisch einen Drehwinkel des Halters einzustellen, wenn das Gehäuse an einer im Fahrzeuginnenraum vorgesehenen Halterung (95) befestigt wird.

## Revendications

1. Appareil de formation d'image d'intérieur de véhicule (1) comprenant :
un dispositif de formation d'image (10) configuré pour former l'image d'une scène d'un intérieur d'un véhicule ;
un dispositif formant source de lumière (20) configuré pour éclairer une plage de formation d'image du dispositif de formation d'image ;
un logement (30) configuré pour loger le dispositif de formation d'image et le dispositif formant source de lumière dans celui-ci, et attaché à l'intérieur ; et
un support (40) configuré pour supporter le dispositif de formation d'image et le dispositif formant source de lumière pour qu'ils puissent tourner d'un seul tenant avec le logement ;
une plaque formant écran à la lumière (50) prévue sur le support entre le dispositif de formation d'image et le dispositif formant source de lumière pour empêcher la lumière rayonnée à partir du dispositif formant source de lumière de frapper le dispositif de formation d'image,
**caractérisé en ce que**
la plaque formant écran à la lumière (50) est une partie de support configurée pour supporter en rotation le support (40) par rapport au logement (30), dans lequel le support (40) comprend une autre partie de support qui est supportée en rotation par le logement à une position opposée à la plaque formant écran à la lumière (50), le dispositif de formation d'image étant interposé entre eux.

2. Appareil de formation d'image d'intérieur de véhicule selon la revendication 1, dans lequel le support comprend des parties de fixation (41) configurées pour fixer le dispositif de formation d'image et le dispositif formant source de lumière respectivement, et
les parties de fixation sont configurées d'une manière telle que les axes optiques du dispositif de formation d'image et du dispositif formant source de lumière ne sont pas orthogonaux à un axe de rotation du support, et une partie pliée (42) est prévue entre les parties de fixation.

3. Appareil de formation d'image d'intérieur de véhicule selon l'une quelconque des revendications 1 et 2, dans lequel le support est supporté, par rapport au logement, au niveau des côtés opposés d'une partie de fixation configurée pour fixer le dispositif de formation d'image.

4. Appareil de formation d'image d'intérieur de véhicule selon l'une quelconque des revendications 1 à 3, dans lequel le support a une surface d'extrémité (43) située de manière à être exposée par rapport au logement, et
la surface d'extrémité est pourvue d'un mécanisme d'établissement d'angle (80) configuré pour établir automatiquement un angle de rotation du support lorsque le logement est attaché à un montage (95) prévu dans l'intérieur de véhicule.
